# EUROPEAN PATENT SPECIFICATION

(11) **EP 3 699 788 B1**
(45) Date of publication and mention of the grant of the patent: **08.04.2026**
(21) Application number: 20158459.6
(22) Date of filing: 20.02.2020
(51) Int. Cl.: G06F 21/10, H04L 9/40

(54) **COMPUTER SYSTEM, COMPUTER APPARATUS, AND LICENSE MANAGEMENT METHOD**
COMPUTERSYSTEM, COMPUTERVORRICHTUNG UND LIZENZVERWALTUNGSVERFAHREN
SYSTÈME INFORMATIQUE, APPAREIL INFORMATIQUE ET PROCÉDÉ DE GESTION DE LICENCES

(30) Priority: 22.02.2019 JP 2019029946
(43) Date of publication of application: 26.08.2020
(73) Proprietor: YOKOGAWA ELECTRIC CORPORATION, Musashino-shi Tokyo 180-8750 (JP)
(72) Inventor: Takabayashi, Yuji, Tokyo, 180-8750 (JP)
(74) Representative: Hoffmann Eitle

(56) References cited:
- US-A1- 2003 084 306
- US-A1- 2006 150 257
- US-A1- 2008 209 577
- US-A1- 2013 305 394

## Description

### CROSS-REFERENCE TO RELATED APPLICATION

The present application claims priority to and the benefit of Japanese Patent Application No. 2019-029946 filed February 22, 2019.

### TECHNICAL FIELD

The present disclosure relates to a computer system, a computer apparatus, and a license management method.

### BACKGROUND

A computer system formed by a plurality of computer apparatuses that perform coordinated operations is used for process control or the like. In such a computer system, software licenses for the plurality of computers to perform coordinated operations need to be properly managed.

One software license management method is a method based on hardware IDs. This method grants a license to each computer apparatus based on the hardware ID of the hardware mounted in the computer apparatus. For example, see patent literature (PTL) 1. Another method is based on the number of software licenses. This method grants only a predetermined number of licenses to computer apparatuses. For example, see PTL 2.

### CITATION LIST

### Patent Literature

PTL 1: JPH7-325712A
PTL 2: JP2006-059163A

The documents US2003/084306 and US2008/209577 also form part of the technological background.

### SUMMARY

With known license management methods based on hardware ID or the number of licenses, it is difficult to prevent unauthorized use of software while also ensuring high availability of the system.

The present disclosure has been conceived in light of these considerations and aims to provide a computer system, a computer apparatus, and a license management method capable of both preventing unauthorized use of software and ensuring high availability of the system.

A computer system according to an embodiment includes a plurality of computer apparatuses that perform coordinated operations, and a first computer apparatus among the plurality of computer apparatuses is configured so that, when an identifier of the first computer apparatus is included in a license file that includes identifiers of a plurality of computer apparatuses to which a license for software to perform the coordinated operations is granted, the first computer apparatus permits the coordinated operations, using the software, by a second computer apparatus other than the first computer apparatus among the plurality of computer apparatuses that perform the coordinated operations, even if an identifier of the second computer apparatus is not included in the license file.

When the second computer apparatus fails or the like, the computer system having such a configuration allows coordinated operations to be performed without the need to wait for the license of the second computer apparatus to be acquired or the like. High availability of the computer system can thereby be ensured. Unauthorized use can also be prevented by the legitimacy of a license being judged based on the identifier of the computer apparatus. The computer system having the aforementioned configuration can thereby prevent unauthorized use of software while also ensuring high availability of the system.

In an embodiment, the second computer apparatus may be configured to stop the coordinated operations when the first computer apparatus stops while the coordinated operations by the second computer apparatus are being permitted even if the identifier of the second computer apparatus is not included in the license file.

This configuration can prevent unauthorized use in which the same license file is used to operate a plurality of computer systems.

In an embodiment, the first computer apparatus may be configured to stop the coordinated operations by the second computer apparatus when the coordinated operations by the second computer apparatus have been permitted for a predetermined time or longer even if the identifier of the second computer apparatus is not included in the license file.

This configuration can prevent unauthorized use in which software is used to continue coordinated operations without receipt of a legitimate license.

In an embodiment, the first computer apparatus may be configured not to permit the coordinated operations by the second computer apparatus when the coordinated operations by the second computer apparatus have been permitted more than a predetermined number of times even if the identifier of the second computer apparatus is not included in the license file.

This configuration can prevent unauthorized use in which software is used to repeatedly continue coordinated operations without receipt of a legitimate license.

In an embodiment, the first computer apparatus may be an operating computer apparatus, and the second computer apparatus may be a standby computer apparatus configured to operate when the operating computer apparatus fails.

This configuration can both prevent unauthorized use of software while ensuring high availability of a redundant system that includes an operating computer apparatus and a standby computer apparatus.

A computer apparatus according to an embodiment is a computer apparatus in a computer system including a plurality of computer apparatuses that perform coordinated operations. The computer apparatus includes a license checking unit configured to judge whether an identifier of the computer apparatus is included in a license file that includes identifiers of a plurality of computer apparatuses to which a license for software to perform the coordinated operations is granted; and an equalization unit configured so that, when the identifier of the computer apparatus is judged by the license checking unit to be included in the license file, the equalization unit permits the coordinated operations, using the software, by another computer apparatus that performs the coordinated operations even if an identifier of the other computer apparatus is not included in the license file.

When the other computer apparatus fails or the like, the computer apparatus having such a configuration allows coordinated operations to be performed without the need to wait for the license of the other computer apparatus to be acquired or the like. High availability of the computer system can thereby be ensured. Unauthorized use can also be prevented by the legitimacy of a license being judged based on the identifier of the computer apparatus. The computer apparatus having the aforementioned configuration can thereby prevent unauthorized use of software while also ensuring high availability of the system.

A license management method according to an embodiment is for managing a license for software to perform coordinated operations in a computer system including a plurality of computer apparatuses that perform the coordinated operations. The license management method includes judging whether an identifier of a first computer apparatus among the plurality of computer apparatuses is included in a license file that includes identifiers of a plurality of computer apparatuses to which the license for software is granted; and permitting the coordinated operations using the software, when the identifier of the first computer apparatus is included in the license file, by a second computer apparatus other than the first computer apparatus among the plurality of computer apparatuses that perform the coordinated operations, even if an identifier of the second computer apparatus is not included in the license file.

When the second computer apparatus fails or the like, the license management method having such a configuration allows coordinated operations to be performed without the need to wait for the license of the second computer apparatus to be acquired or the like. High availability of the computer system can thereby be ensured. Unauthorized use can also be prevented by the legitimacy of a license being judged based on the identifier of the computer apparatus. The license management method having the aforementioned configuration can thereby prevent unauthorized use of software while also ensuring high availability of the system.

A computer system, a computer apparatus, and a license management method according to the present disclosure are capable of both preventing unauthorized use of software and ensuring high availability of the system.

### BRIEF DESCRIPTION OF THE DRAWINGS

In the accompanying drawings:
FIG. 1 illustrates an example configuration of a computer system according to an embodiment of the present disclosure;
FIG. 2 illustrates software for managing licenses in the computer system illustrated in FIG. 1;
FIG. 3 illustrates a license file in the computer system illustrated in FIG. 1;
FIG. 4 illustrates an example hardware configuration of the computer apparatus illustrated in FIG. 1;
FIG. 5 illustrates the authentication state of licenses in the computer system illustrated in FIG. 1;
FIG. 6 illustrates the transition among license authentication states in the computer system illustrated in FIG. 1;
FIG. 7 is a flowchart illustrating a license management method in the computer system illustrated in FIG. 1;
FIG. 8 illustrates a license file in the license management method according to a first comparative example;
FIG. 9 illustrates an example configuration of a computer system to which a license management method according to the first comparative example is applied; and
FIG. 10 illustrates an example configuration of a computer system to which a license management method according to a second comparative example is applied.

### DETAILED DESCRIPTION

Embodiments of the present disclosure are described below with reference to the drawings. Identical reference signs in the drawings indicate identical or similar constituent elements.

First, for the sake of comparison, a license management method according to a first comparative example is described. The license management method according to the first comparative example is a method based on hardware IDs. This method is mainly intended to prevent unauthorized use of software. Specifically, the license management method according to the first comparative example permits software to operate only on a designated computer apparatus and prevents the software from operating if duplicated on another computer apparatus.

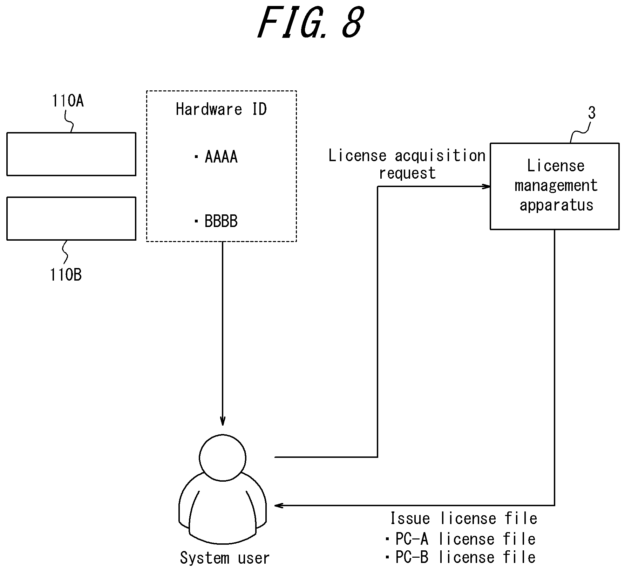

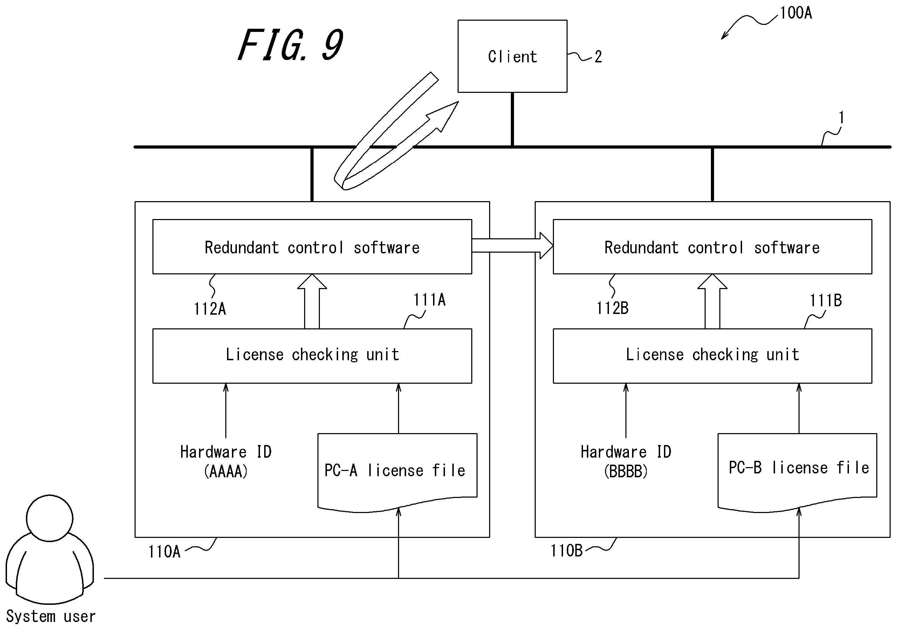

FIG. 8 illustrates a license file in the license management method according to the first comparative example. FIG. 9 illustrates an example configuration of a computer system 100A to which the license management method according to the first comparative example is applied. In FIGS. 8 and 9, the computer system 100A includes two computer apparatuses 110A, 110B that perform coordinated operations. The coordinated operations performed by the computer apparatuses 110A, 110B are redundant operations such that one of the computer apparatuses 110 becomes an operating computer apparatus that provides a service to a client 2 connected over a network 1, and the other computer apparatus 110 becomes a standby computer apparatus that stands by in case the operating computer apparatus fails. It is assumed here that the computer apparatus 110A is set in advance to function as the operating computer apparatus, and that the computer apparatus 110B is set in advance to function as the standby computer apparatus. The computer apparatuses 110A, 110B are collectively referred to as computer apparatuses 110 when no distinction is made therebetween.

As illustrated in FIG. 8, the system user acquires the ID (hardware ID) of the hardware mounted in each of the computer apparatuses 110A, 110B that perform redundant operations. The hardware ID is an identifier capable of identifying a computer apparatus 110, such as the serial number of the body of the computer apparatus 110, the serial number of a hard disk mounted in the computer apparatus 110, the media access control (MAC) address of an Ethernet^{®} (Ethernet is a registered trademark in Japan, other countries, or both) card mounted in the computer apparatus 110, or the like. The hardware ID of the computer apparatus 110A is assumed below to be "AAAA", and the hardware ID of the computer apparatus 110B to be "BBBB".

The system user transmits a license acquisition request, which is a request to acquire a license for software for the computer apparatus 110A and the computer apparatus 110B to perform redundant operations (redundant control software), to a license management apparatus 3 that manages licenses for the redundant control software. The hardware ID "AAAA" of the computer apparatus 110A and the hardware ID "BBBB" of the computer apparatus 110B are included in the license acquisition request. The license management apparatus 3 is, for example, managed by the software vendor that provides the redundant control software.

Upon receiving the license acquisition request, the license management apparatus 3 issues a license file granting a license for the redundant control software to the system user. In the example in FIG. 8, the license management apparatus 3 issues a license file for the computer apparatus 110A (PC-A license file) and a license file for the computer apparatus 110B (PC-B license file). In other words, the license management apparatus 3 issues separate license files for each computer apparatus 110. The hardware ID "AAAA" of the computer apparatus 110A is included in the PC-A license file. The hardware ID "BBBB" of the computer apparatus 110B is included in the PC-B license file.

The license file issued to each computer apparatus 110 is installed on the corresponding computer apparatus 110. In other words, as illustrated in FIG. 9, the PC-A license file is installed on the computer apparatus 110A. The PC-B license file is installed on the computer apparatus 110B.

The computer apparatus 110 includes a license checking unit 111. The license checking unit 111 judges whether the hardware ID included in the license file installed on the corresponding computer apparatus 110 matches the hardware ID of the corresponding computer apparatus 110. When the hardware ID included in the license file matches the hardware ID of the corresponding computer apparatus 110, the license checking unit 111 permits the redundant control software installed on the corresponding computer apparatus 110 to run. When the hardware ID included in the license file does not match the hardware ID of the corresponding computer apparatus 110, the license checking unit 111 issues an instruction to suspend the redundant control software installed on the corresponding computer apparatus 110.

In other words, when the hardware ID included in the PC-A license file and the hardware ID "AAAA" of the computer apparatus 110A match, the license checking unit 111A of the computer apparatus 110A permits the redundant control software 112A installed on the computer apparatus 110A to run. When the hardware ID included in the PC-A license file and the hardware ID "AAAA" of the computer apparatus 110A do not match, the license checking unit 111A issues an instruction to suspend the redundant control software 112A.

When running is permitted by the license checking unit 111A, the redundant control software 112A instructs the redundant control software 112B installed on the computer apparatus 110B, which is the standby computer apparatus, to start redundant operations.

When the hardware ID included in the PC-B license file and the hardware ID "BBBB" of the computer apparatus 110B match, the license checking unit 111B of the computer apparatus 110B permits the redundant control software 112B installed on the computer apparatus 110B to run. When the hardware ID included in the PC-B license file and the hardware ID "BBBB" of the computer apparatus 110B do not match, the license checking unit 111B issues an instruction to suspend the redundant control software 112B.

When the redundant control software 112B is permitted to run by the license checking unit 111B and is instructed by the redundant control software 112A to start redundant operations, then the computer apparatus 110A and the computer apparatus 110B start processing for redundant operations. In other words, if the license of the computer apparatus 110A and the license of the computer apparatus 110B are valid, then redundant operations are performed between the computer apparatus 110A and the computer apparatus 110B. After redundant operations have begun, an abnormality may occur in the computer apparatus 110A that is the operating computer apparatus, and the computer apparatus 110A may stop operating. In this case, the computer apparatus 110B that is the standby computer apparatus can operate and continue to provide the service to the client 2.

If the hardware of one computer apparatus 110 in the computer system 100A illustrated in FIG. 9 fails, for example, then the failed hardware needs to be replaced so that the computer apparatus 110 that failed can resume redundant operations. Hardware is replaced and the hardware ID changes in this case. Hence, the license for the new hardware needs to be acquired, and the license file needs to be installed.

Normally, it takes time for license acquisition. Therefore, the computer apparatus 110 whose hardware was replaced cannot resume redundant operations until license acquisition is complete. The computer system 100A consequently enters a state of single operation, in which only the computer apparatus 110 that has not failed is operating. If an abnormality occurs in the computer apparatus 110 operating in this state, it may become difficult to provide the service, which could have an enormous impact.

Next, a license management method according to a second comparative example is described. The license management method according to the second comparative example is a method based on the number of licenses. This method emphasizes high availability that allows flexible transfer of licenses in response to exchange of hardware or the like.

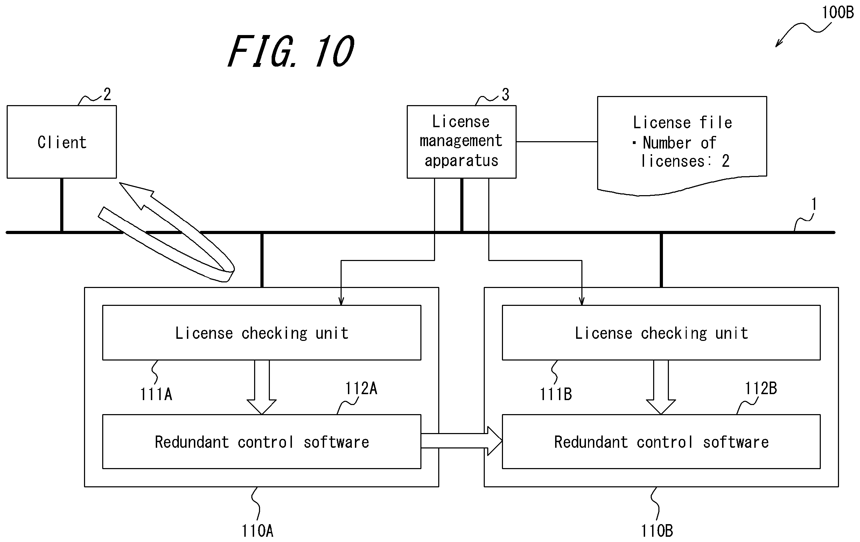

FIG. 10 illustrates an example configuration of a computer system 100B to which the license management method according to the second comparative example is applied.

In the computer system 100B illustrated in FIG. 10, a license management apparatus 3 manages licenses. The number of licenses for the redundant control software (such as two) is set in the license management apparatus 3. The license management apparatus 3 distributes the licenses to the computer apparatuses 110A, 110B connected over the network 1. Upon distributing the licenses to the computer apparatuses 110, the license management apparatus 3 reduces the set number of licenses by the number of distributed licenses. The license management apparatus 3 does not distribute any more licenses once the number of licenses reaches zero. In other words, the license management apparatus 3 can only distribute the set number of licenses.

Unlike the license management method according to the first comparative example, licenses and hardware are not associated in the license management method according to the second comparative example, and licenses can be distributed to any hardware (computer apparatus 110). The license management method according to the second comparative example can also prevent more than the set number of licenses from being distributed and can prevent unauthorized use of the redundant control software.

In the computer apparatus 110, the legitimacy of the license is checked by the license checking unit 111. The computer apparatus 110A and the computer apparatus 110B perform redundant operations when the license is determined to be legitimate on both the computer apparatus 110A and the computer apparatus 110B.

If the hardware of one computer apparatus 110 fails, then the failed hardware needs to be replaced so that the computer apparatus 110 that failed can resume redundant operations. In this case, since licenses and hardware are not associated in the license management method according to the second comparative example, a license can be distributed to the new computer apparatus 110 by erasing the license of the computer apparatus 110 that failed from the license management apparatus 3 (by increasing the number of licenses).

The license management methods according to the first and second comparative examples have the following advantages and disadvantages.

The advantage of the license management method according to the first comparative example is that unauthorized use of software can be prevented, since software is permitted to operate only on designated hardware. The disadvantage of the license management method according to the first comparative example is reduced availability, since the system needs to operate in a single operation state until acquisition of the license for the new hardware is complete.

The advantage of the license management method according to the second comparative example is that licenses can be transferred flexibly, which facilitates maintenance and can guarantee high availability even when hardware needs to be replaced. The disadvantage of the license management method according to the second comparative example is that unauthorized use of software is possible if an environment consisting of the license management apparatus 3 and the computer apparatuses 110 described with reference to FIG. 10 is constructed over another network.

It is thus difficult for the license management methods according to the first and second comparative examples to prevent unauthorized use of software while also ensuring high availability of the system.

Next, the configuration of a computer system 10 according to an embodiment of the present disclosure is described.

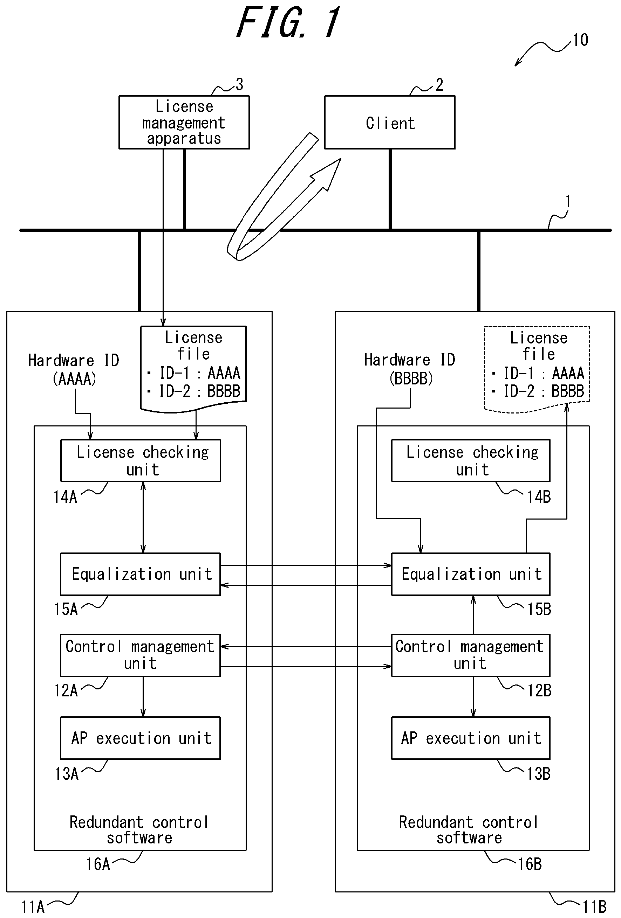

FIG. 1 illustrates an example configuration of the computer system 10 according to the present embodiment.

The computer system 10 illustrated in FIG. 1 includes a plurality of computer apparatuses 11 (computer apparatuses 11A, 11B in FIG. 1) that perform coordinated operations. The computer system 10 manages software licenses for the plurality of computer apparatuses 11 to perform coordinated operations. In the present embodiment, the software managed by licenses is software for the plurality of computer apparatuses 11A, 11B to perform coordinated operations. The coordinated operations performed by the computer apparatuses 11A, 11B are redundant (duplicate) operations such that one of the computer apparatuses 11 becomes an operating computer apparatus that provides a service to a client 2 connected over a network 1, and the other computer apparatus 11 becomes a standby computer apparatus that stands by in case the operating computer apparatus fails. It is assumed here that the computer apparatus 11A is set in advance to function as the operating computer apparatus, and that the computer apparatus 11B is set in advance to function as the standby computer apparatus. The computer apparatuses 11A, 11B are collectively referred to as computer apparatuses 11 when no distinction is made therebetween.

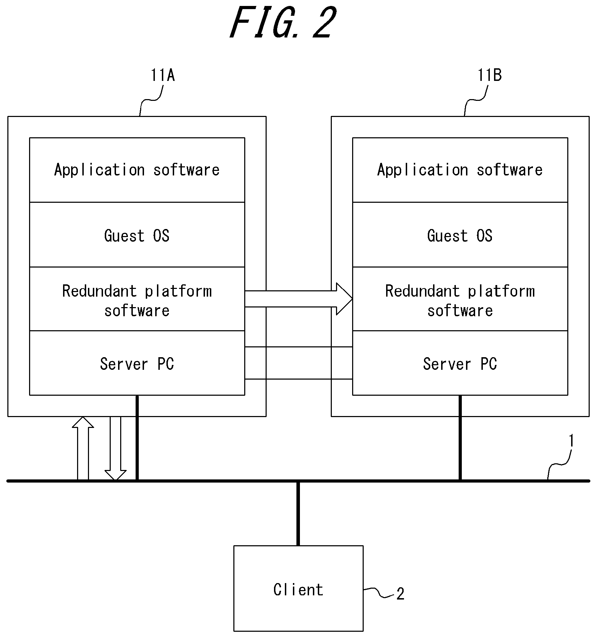

First, the software managed by licenses in the computer system 10 according to the present embodiment is described with reference to FIG. 2.

As illustrated in FIG. 2, the computer apparatus 11A and the computer apparatus 11B are connected over the network 1. The computer apparatus 11A and the computer apparatus 11B are also connected directly by a cable or the like, without passing through the network 1. The computer apparatus 11 may, for example, be configured by a server that is a personal computer (PC). The computer apparatus 11A functions as the operating computer apparatus and provides a service over the network 1 to the client 2. The computer apparatus 11B functions as a standby computer apparatus that operates to provide the service to the client 2 when the computer apparatus 11A fails.

The software configuration of the computer apparatus 11 includes redundant platform software, a guest operating system (OS), and application software, for example, as illustrated in FIG. 2. The redundant platform software is software for the computer apparatus 11A and the computer apparatus 11B to perform redundant operations (duplicate operations). Processing such as equalization of the internal state of the computer apparatus 11A and the computer apparatus 11B and mutual failure detection is necessary for the computer apparatus 11A and the computer apparatus 11B to perform redundant operations. The redundant platform software is software for the computer apparatus 11A and the computer apparatus 11B to perform the above-described redundant operations.

The guest OS is an operating system that operates on a virtual machine constructed on the server PC. The application software is software of an application that runs on the guest OS and provides a predetermined service to the client 2, for example.

In the present embodiment, the software managed by licenses is software, such as the above-described redundant platform software, for the plurality of computer apparatuses 11 to perform coordinated operations. As described above, the computer apparatus 11A and the computer apparatus 11B perform redundant operations such that one computer apparatus functions as an operating computer apparatus and the other as a standby computer apparatus. The software for the plurality of computer apparatuses 11 to perform coordinated operations is described below using an example in which the software is for the computer apparatus 11A and the computer apparatus 11B to perform redundant operations (redundant control software). The licenses for the guest OS and application software are, for example, managed by the software vendor or the like that provides each piece of software. Since this license management is not directly related to the present disclosure, a description thereof is omitted.

Referring again to FIG. 1, a license file granting a license for the redundant control software is issued by the license management apparatus 3 and inputted to the computer apparatus 11A set in advance as the operating computer apparatus.

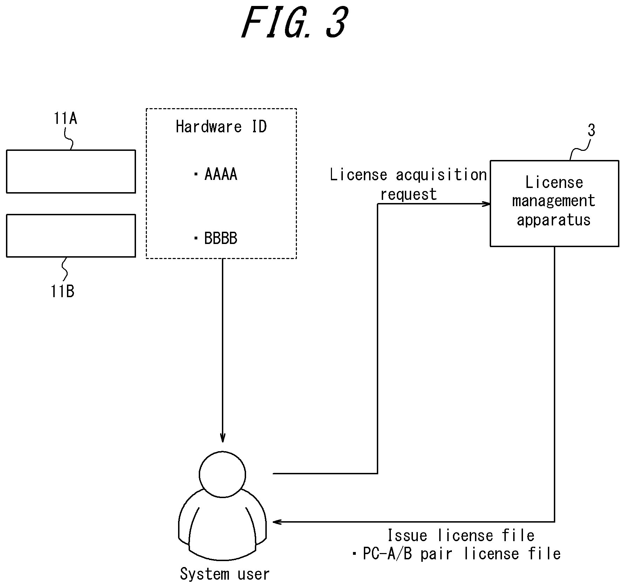

The license file according to the present embodiment is described with reference to FIG. 3.

As illustrated in FIG. 3, the system user acquires the ID (hardware ID) of the hardware mounted in each of the computer apparatuses 11A, 11B that perform redundant operations. The hardware ID of the computer apparatus 11A is assumed below to be "AAAA", and the hardware ID of the computer apparatus 11B to be "BBBB".

The system user transmits a license acquisition request, which is a request to acquire a license for software for the computer apparatus 11A and the computer apparatus 11B to perform redundant operations (redundant control software), to the license management apparatus 3. The hardware ID "AAAA" of the computer apparatus 11A and the hardware ID "BBBB" of the computer apparatus 11B are included in the license acquisition request.

Upon receiving the license acquisition request, the license management apparatus 3 issues a license file granting a license for the redundant control software to the system user. In the present embodiment, the license management apparatus 3 issues a license file that designates the computer apparatus 11A and the computer apparatus 11B for which licenses were requested in the license acquisition request as a pair (PC-A/B pair license file). Specifically, the license management apparatus 3 issues a license file including the hardware ID "AAAA" of the computer apparatus 11A and the hardware ID "BBBB" of the computer apparatus 11B. In this way, the license management apparatus 3 issues a license file that includes the identifiers of a plurality of computer apparatuses 11 to which licenses for software to perform coordinated operations are granted. The license management apparatus 3 may include the hardware IDs in the license file after encrypting the hardware IDs with an encryption method decryptable by the computer apparatuses 11A, 11B. This can prevent tampering with the license file by a third party, leakage of the hardware IDs included in the license file, and the like.

The PC-A/B pair license file issued by the license management apparatus 3 is inputted (downloaded) to the computer apparatus 11A set in advance as the operating computer apparatus.

Next, the configuration of the computer apparatus 11 is described with reference to FIG. 1. The configuration of the computer apparatus 11A and the configuration of the computer apparatus 11B are the same. Therefore, only the configuration of the computer apparatus 11A is described below, and a description of the configuration of the computer apparatus 11B is omitted.

As illustrated in FIG. 1, the computer apparatus 11A includes a control management unit 12A, an AP execution unit 13A, a license checking unit 14A, and an equalization unit 15A.

The control management unit 12A exchanges information with the control management unit 12 of another computer apparatus 11 performing coordinated operations (in FIG. 1, the control management unit 12B of the computer apparatus 11B) and determines whether each computer apparatus 11 should function as the operating computer apparatus or as the standby computer apparatus. At times such as when the computer system 10 starts up, a computer apparatus 11 set in advance as the operating computer apparatus functions as the operating computer apparatus, and the other computer apparatus 11 functions as the standby computer apparatus.

When it is determined that the computer apparatus 11A is to function as the operating computer apparatus, the control management unit 12A issues a startup instruction to the AP execution unit 13A to start up on the operation side. When it is determined that the computer apparatus 11A is to function as the standby computer apparatus, the control management unit 12A issues a startup instruction to the AP execution unit 13A to start up on the standby side. When the computer apparatus 11A functions as the standby computer apparatus, the control management unit 12A passes the control to the computer apparatus 11 functioning as the operating computer apparatus.

When a startup instruction to start up on the operation side has been issued from the control management unit 12A, the AP execution unit 13A starts up an execution environment, such as an application, for providing a predetermined service to the client 2. When a startup instruction to start up on the standby side has been issued from the control management unit 12A, the AP execution unit 13A waits to execute the application until failure of the other computer apparatus 11 functioning as the operating computer apparatus is detected and control passes to the computer apparatus 11A.

The license checking unit 14A checks the legitimacy of licenses for the computer apparatus 11A and the other computer apparatus 11 performing coordinated operations with the computer apparatus 11A (in FIG. 1, the computer apparatus 11B) based on the inputted license file.

The equalization unit 15A performs an equalization process to equalize the internal state of the computer apparatus 11A and the other computer apparatus 11 performing coordinated operations with the computer apparatus 11A (in FIG. 1, the computer apparatus 11B).

The functions of the control management unit 12A, the AP execution unit 13A, the license checking unit 14A, and the equalization unit 15A can, for example, be implemented by a processor or the like executing redundant control software 16A installed on the computer apparatus 11A.

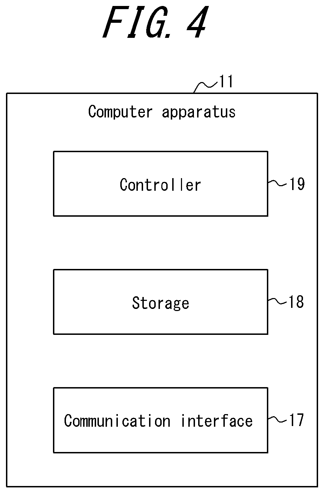

FIG. 4 illustrates an example hardware configuration of the computer apparatus 11.

As illustrated in FIG. 4, the computer apparatus 11 includes a communication interface 17, a storage 18, and a controller 19.

The communication interface 17 includes a communication module that connects to the network 1. The communication interface 17 also includes a communication module for connecting with the other computer apparatus 11 without passing through the network 1.

The storage 18 includes one or more memories. In the present embodiment, the "memory" may be a semiconductor memory, a magnetic memory, an optical memory, or the like but is not limited to these examples. Each memory included in the storage 18 may, for example, function as a main storage apparatus, an auxiliary storage apparatus, or a cache memory. For example, the storage 18 stores any software used for operation of the computer apparatus 11 (such as the various software described with reference to FIG. 2).

The controller 19 includes one or more processors. In the present embodiment, the "processor" may be a general-purpose processor, a processor specialized for particular processing, or the like but is not limited to these examples. The controller 19 executes the software stored in the storage 18 and controls overall operations of the computer apparatus 11.

Next, the operations of the computer system 10 according to the present embodiment are described.

In the present embodiment, three states are prepared as license authentication states.

The first state is a valid license state. The valid license state refers to the state in which the hardware ID of the operating computer apparatus and the hardware ID of the standby computer apparatus both match the hardware IDs included in the license file. In this case, licenses have been authenticated regularly. Coordinated operations by a plurality of computer apparatuses 11 (in FIG. 1, redundant operations by the computer apparatuses 11A, 11B) are therefore permitted.

The second state is a temporary license state. The temporary license state refers to the state in which the hardware ID of the operating computer apparatus matches the hardware ID included in the license file, whereas the hardware ID of the standby computer apparatus does not match the hardware ID included in the license file. In the present embodiment, redundant operations by the computer apparatuses 11A, 11B are temporarily permitted in this case so as not to impair availability.

The temporary license state is, for example, a state in which one computer apparatus 11 in the computer system 10 has failed and been replaced by a new computer apparatus 11. In this case, providing the temporary license state allows redundant operations to be resumed with the replaced computer apparatus 11 functioning as the standby computer apparatus.

The license management method according to the first comparative example results in a single operation state, in which only one computer apparatus that has not failed is operative, until acquisition of the license for the replaced computer apparatus 11 is complete. Therefore, the license management method according to the first comparative example leads to a reduction in availability of the system.

By contrast, the present embodiment permits redundant operations even if the hardware ID of the standby computer apparatus does not match the hardware ID included in the license file. Redundant operations can therefore continue to be performed until acquisition of the license for the replaced computer apparatus 11 is complete. The present embodiment can thereby ensure high availability of the system.

To prevent unauthorized use, however, the temporary license state requires that the hardware ID of the operating computer apparatus match the hardware ID included in the license file and that the hardware ID of the standby computer apparatus not match the hardware ID included in the license file. Accordingly, redundant operations are not permitted if the hardware ID of the operating computer apparatus does not match the hardware ID included in the license file but the hardware ID of the standby computer apparatus does match the hardware ID included in the license file. In other words, when the operating computer apparatus stops operating during the temporary license state, redundant operations are not permitted, resulting in a single operation state by the standby computer apparatus. The computer apparatuses 11A, 11B cannot resume redundant operations in this case unless the license file is updated.

The third state is an invalid license state. The invalid license state refers to the state in which neither the hardware ID of the operating computer apparatus nor the hardware ID of the standby computer apparatus matches the hardware IDs included in the license file. In this case, redundant operations are not permitted to prevent unauthorized use. Only single operation is permitted.

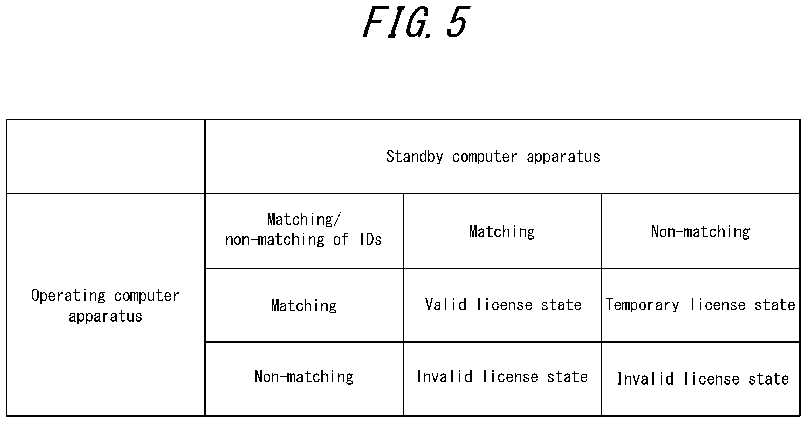

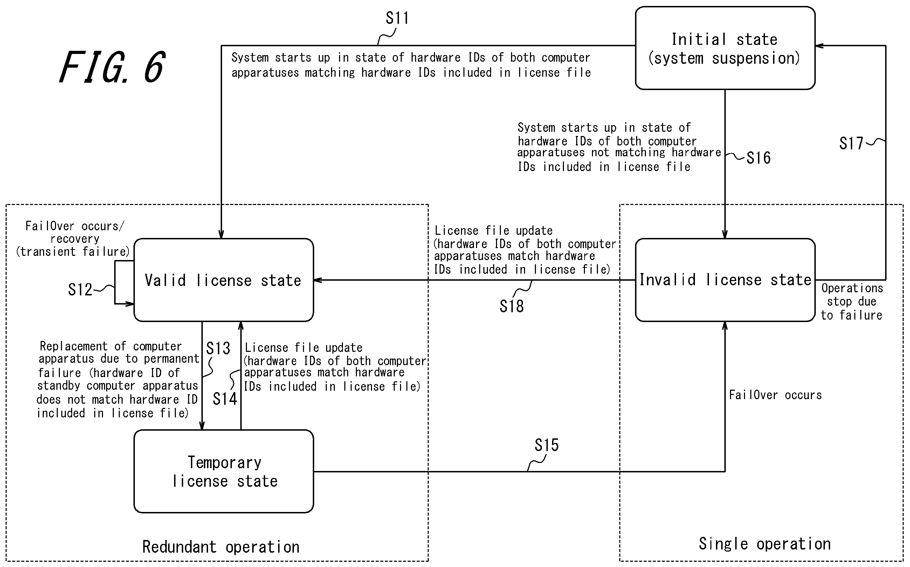

FIG. 5 illustrates how the matching or non-matching between the hardware IDs of the operating and standby computer apparatuses and the hardware IDs included in the license file relates to the above-described three authentication states. FIG. 6 illustrates the transition among the valid license state, the temporary license state, and the invalid license state.

The transition among license authentication states in the computer system 10 according to the present embodiment is described with reference to FIGS. 1 and 6.

The computer system 10 is started up from an initial state of suspension. When the hardware ID of the computer apparatus 11A and the hardware ID of the computer apparatus 11B match the hardware IDs included in the license file at this time, then the license authentication state transitions from the initial state to the valid license state, as illustrated in FIG. 6 (step S11).

In greater detail, the license file is downloaded onto the computer apparatus 11A set in advance as the operating computer apparatus.

When the computer apparatus 11A and the computer apparatus 11B start up, the control management unit 12A and the control management unit 12B exchange information and determine that the computer apparatus 11A will function as the operating computer apparatus and the computer apparatus 11B as the standby computer apparatus.

When it is determined that the computer apparatus 11A is to function as the operating computer apparatus, the control management unit 12A issues a startup instruction to the AP execution unit 13A to start up on the operation side. When a startup instruction to start up on the operation side has been issued, the AP execution unit 13A starts up an execution environment, such as an application, for providing a service to the client 2.

The license checking unit 14A refers to the license file to check the licenses. Specifically, the license checking unit 14A judges whether the hardware ID "AAAA" of the computer apparatus 11A matches the hardware ID included in the license file. When the hardware ID "AAAA" of the computer apparatus 11A matches the hardware ID included in the license file, the license checking unit 14A judges that the license for the computer apparatus 11A is legitimate.

When it is determined that the computer apparatus 11B is to function as the standby computer apparatus, the control management unit 12B issues a startup instruction to the AP execution unit 13B to start up on the standby side. The control management unit 12B issues an equalization instruction to the equalization unit 15B to perform equalization processing with the computer apparatus 11A.

When the equalization instruction is issued from the control management unit 12B, the equalization unit 15B transmits an equalization start request, requesting to start equalization processing, to the equalization unit 15A of the computer apparatus 11A in order to match the internal state of the computer apparatus 11B to the internal state of the computer apparatus 11A. The equalization unit 15B includes the hardware ID "BBBB" of the computer apparatus 11B in the equalization start request.

Upon receiving the equalization start request from the equalization unit 15B, the equalization unit 15A outputs the hardware ID of the computer apparatus 11B included in the equalization start request to the license checking unit 14A. The license checking unit 14A judges whether the hardware ID of the computer apparatus 11B outputted from the equalization unit 15A matches the hardware ID included in the license file.

When the hardware ID of the computer apparatus 11B matches the hardware ID included in the license file, the license checking unit 14A judges that the license for the computer apparatus 11B is legitimate. When the license checking unit 14A judges that the license for the computer apparatus 11B is legitimate, the equalization unit 15A transmits an equalization response permitting the start of equalization processing to the equalization unit 15B. The equalization unit 15A includes the license file in the transmitted equalization response. Upon receiving the equalization response, the equalization unit 15B stores the license file included in the equalization response in the storage 18 and performs equalization processing. When the hardware IDs of the computer apparatus 11A and the computer apparatus 11B are included in the license file, the license authentication state transitions to the valid license state. The computer apparatus 11A and the computer apparatus 11B can therefore perform redundant operations.

If the computer apparatus 11A, for example, fails in the valid license state and stops operating, then the computer apparatus 11B that is the standby computer apparatus temporarily functions as the operating computer apparatus (FailOver). When the failure of the computer apparatus 11A is transient, and the computer apparatus 11A is able to return to normal operation without hardware replacement or the like, then the hardware ID of the computer apparatus 11A does not change. The license authentication state can return to the valid license state by the above-described procedure (step S12).

Suppose that, in the valid license state, one of the computer apparatus 11A and the computer apparatus 11B fails permanently and stops operating, making hardware replacement necessary. If the computer apparatus 11A that is the operating computer apparatus has stopped operating, then FailOver occurs, and the computer apparatus 11B that is the standby computer apparatus operates. If the computer apparatus 11B that is the standby computer apparatus has stopped operating, then the computer apparatus 11A that is the operating computer apparatus separates from the computer apparatus 11B and performs single operation.

Here, an example of failure of the computer apparatus 11B that is the standby computer apparatus is described. When the computer apparatus 11B starts up after the failed hardware of the computer apparatus 11B is replaced, the equalization unit 15B transmits an equalization start request to the equalization unit 15A by the above-described procedure. Since the computer apparatus 11B has been replaced, the hardware ID has also changed. The hardware ID of the computer apparatus 11B therefore does not match the hardware ID included in the license file. In this case, the license authentication state transitions from the valid license state to the temporary license state (step S13). In the temporary license state, the equalization unit 15A transmits the equalization response permitting the start of equalization processing to the equalization unit 15B even if the hardware ID of the computer apparatus 11B does not match the hardware ID included in the license file.

In this way, when the license checking unit 14A judges that the identifier (hardware ID) of the corresponding computer apparatus (computer apparatus 11A) is included in the license file, the equalization unit 15A in the present embodiment permits coordinated operations by another computer apparatus that performs coordinated operations (computer apparatus 11B) using the redundant control software, even if the identifier of the computer apparatus 11B is not included in the license file. In other words, when the computer apparatus 11A (first computer apparatus) is one of a plurality of computer apparatuses 11 performing coordinated operations and the identifier of the computer apparatus 11A is included in a license file that includes the identifiers of the plurality of computer apparatuses 11 to which a license for software to perform coordinated operations is granted, then the computer apparatus 11A permits coordinated operations, using the redundant control software, by a computer apparatus 11B (second computer apparatus) other than the computer apparatus 11A among the plurality of computer apparatuses performing coordinated operations, even if the identifier of the computer apparatus 11B is not included in the license file.

When a license is newly acquired for the computer apparatus 11B in which hardware was replaced, it normally takes some time for the license to be issued. Therefore, until acquisition of the license is complete, the computer system 10 needs to perform single operation with the computer apparatus 11A, which reduces availability. When the computer apparatus 11A that is the operating computer apparatus fails, then after the operating computer apparatus switches to the computer apparatus 11B, coordinated operations by the computer apparatus 11B using the redundant control software is temporarily permitted, as described above, between the computer apparatus 11B and the new computer apparatus 11 that has replaced the computer apparatus 11A, even if the identifier of the new computer apparatus 11 is not included in the license file.

In the present embodiment, redundant operations are temporarily permitted if the hardware ID of the operating computer apparatus matches the hardware ID included in the license file, even if the hardware ID of the standby computer apparatus does not match the hardware ID included in the license file. Redundant operations can therefore be performed without the need to wait for the license of the standby computer apparatus to be acquired or the like. High availability of the computer system 10 is thereby ensured. Unauthorized use can also be prevented by the legitimacy of a license being judged based on the hardware ID of the computer apparatus 11.

When the license file is updated during the temporary license state and the hardware ID of the computer apparatus 11A and the hardware ID of the computer apparatus 11B are included in the updated license file, the license authentication state transitions from the temporary license state to the valid license state (step S14).

If the computer apparatus 11A that is the operating computer apparatus fails and stops operating during the temporary license state, then FailOver occurs, and the computer apparatus 11B that is the standby computer apparatus operates. In this case, the license authentication state transitions from the temporary license state to the invalid license state (step S15), and single operation is performed by the standby computer apparatus. If redundant operations were permitted when the operating computer apparatus stops during the temporary license state, then the same license file could be used for unauthorized operation of two redundant systems. To prevent such unauthorized use when the operating computer apparatus stops during the temporary license state, the computer apparatus 11 that functions as the new operating computer apparatus, and whose hardware ID is not included in the license file, suspends redundant operations (coordinated operations).

When the system is started up from an initial state in which the hardware ID of the computer apparatus 11A and the hardware ID of the computer apparatus 11B do not match the hardware IDs included in the license file, the license authentication state transitions from the initial state to the invalid license state (step S16). In this case, single operation is performed by one computer apparatus 11 (such as the computer apparatus 11A).

When one computer apparatus 11 that is performing operations stops due to failure during the invalid license state, the computer system 10 returns to the initial state (step S17).

When the license file is updated during the invalid license state, and the hardware ID of the computer apparatus 11A and the hardware ID of the computer apparatus 11B match the hardware IDs included in the updated license file, then the license authentication state transitions to the valid license state (step S18).

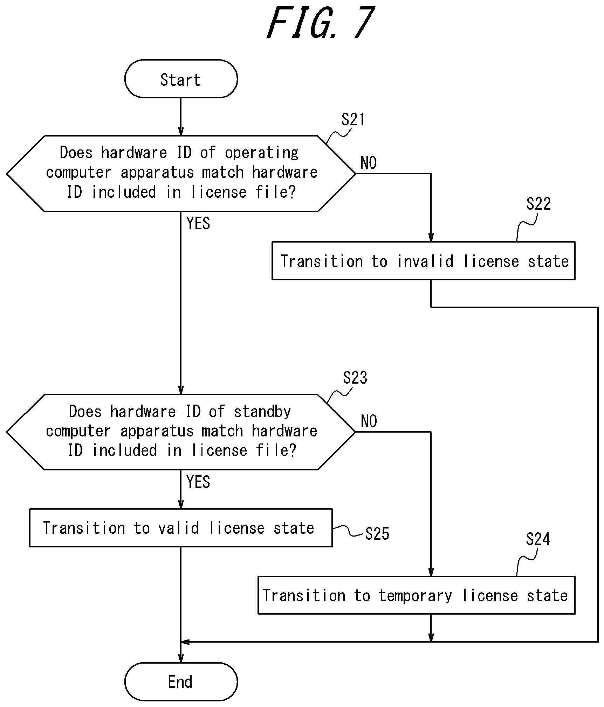

FIG. 7 is a flowchart illustrating a license management method executed by the computer system 10 according to the present embodiment.

The license checking unit 14A of the computer apparatus 11A that is the operating computer apparatus judges whether the hardware ID of the computer apparatus 11A matches the hardware ID included in the license file (step S21). In other words, the license management method according to the present embodiment includes the step of judging whether the identifier of the computer apparatus 11A (first computer apparatus), which is one of the plurality of computer apparatuses 11 performing coordinated operations, is included in the license file.

When it is judged that the hardware ID of the computer apparatus 11A does not match the hardware ID included in the license file (step S21: No), the license authentication state transitions to the invalid license state (step S22). In the invalid license state, coordinated operations by the computer apparatus 11A and the computer apparatus 11B are not performed. Rather, single operation is performed by the computer apparatus 11A, which is the operating computer apparatus.

When it is judged that the hardware ID of the computer apparatus 11A that is the operating computer apparatus matches the hardware ID included in the license file (step S21: Yes), the license checking unit 14A judges whether the hardware ID of the computer apparatus 11B that is the standby computer apparatus matches the hardware ID included in the license file (step S23).

When it is judged that the hardware ID of the computer apparatus 11B does not match the hardware ID included in the license file (step S23: No), the license authentication state transitions to the temporary license state (step S24). In the temporary license state, redundant operations are performed by the computer apparatus 11A and the computer apparatus 11B. In other words, the license management method according to the present embodiment includes a step of permitting coordinated operations, using the redundant control software, by the computer apparatus 11B (second computer apparatus), which is a computer apparatus other than the computer apparatus 11A among the plurality of computer apparatuses performing coordinated operations, when the identifier of the computer apparatus 11A is included in the license file, even if the identifier of the computer apparatus 11B is not included in the license file.

When the computer apparatus 11A that is the operating computer apparatus stops operating due to failure during the temporary license state, then as described above, redundant operations cannot resume even if the hardware of the failed computer apparatus 11A is replaced or the like and the computer apparatus 11A is restarted. To resume redundant operations, the license file needs to be updated.

When it is judged that the hardware ID of the computer apparatus 11B matches the hardware ID included in the license file (step S23: Yes), the license authentication state transitions to the valid license state (step S25). In the valid license state, redundant operations are performed by the computer apparatus 11A and the computer apparatus 11B. As described above, when either of the computer apparatuses 11A, 11B fails during the valid license state and the failed computer apparatus 11 has its hardware replaced or the like and is restarted, then the license authentication state transitions to the temporary license state, and the computer apparatus 11A and the computer apparatus 11B can perform redundant operations.

An expiration date may be set for the temporary license state, and coordinated operations may be suspended if the license authentication state does not transition to the valid license state before the expiration date. In other words, the computer apparatus 11 that is the operating computer apparatus (first computer apparatus) may suspend coordinated operations by another computer apparatus 11 that performs coordinated operations (second computer apparatus) when a state (temporary license state), in which coordinated operations by the other computer apparatus 11 are permitted even if the identifier of the other computer apparatus 11 is not included in the license file, has continued for a predetermined time or longer. This prevents the redundant control software from being used to continue redundant operations without receipt of a legitimate license.

A limit may be placed on the number of transitions to the temporary license state, and when the limit is exceeded, permission for coordinated operations may be withheld. In other words, the computer apparatus 11 that is the operating computer apparatus (first computer apparatus) may withhold permission for coordinated operations by another computer apparatus 11 that performs coordinated operations (second computer apparatus) when coordinated operations by the other computer apparatus 11 have been permitted more than a predetermined number of times even if the identifier of the other computer apparatus 11 is not included in the license file. This prevents the redundant control software from being used to repeatedly continue redundant operations without receipt of a legitimate license.

In the present embodiment, the computer system 10 has been described as a system in which two computer apparatuses 11 (computer apparatuses 11A, 11B) perform redundant operations (redundant system). The present disclosure is not, however, limited to this example. The present disclosure can be applied to various systems with a redundant configuration in which a plurality of computer apparatuses 11 perform coordinated operations, such as a cluster server, a high availability (HA) cluster, a fault tolerant (FT) server, a multi-server, or the like.

The present disclosure can, for example, be applied to a process control system for performing process control in a plant such as a supervisory control and data acquisition (SCADA) system, a plant information management system, a communication gateway system, or a driving efficiency improvement support system, but these examples are not limiting. The present disclosure can be applied to various systems that require high reliability and high availability, such as IT systems and medical systems.

In the present embodiment, when the hardware ID of a first computer apparatus among a plurality of computer apparatuses 11 that perform coordinated operations is included in a license file, then coordinated operations, using the software, by a second computer apparatus other than the first computer apparatus among the plurality of computer apparatuses 11 are permitted, even if the hardware ID of the second computer apparatus is not included in the license file.

When the second computer apparatus fails or the like, coordinated operations can therefore be performed without the need to wait for the license of the second computer apparatus to be acquired or the like. High availability of the computer system 10 can thereby be ensured. Unauthorized use can also be prevented by the legitimacy of a license being judged based on the identifier of the computer apparatus 11. The present disclosure can thereby prevent unauthorized use of software while also ensuring high availability of the system.

The above embodiments have been described as representative examples, but it will be apparent to those of ordinary skill in the art that numerous modifications and replacements may be made within the scope of the present disclosure. Therefore, the present disclosure should not be interpreted as being restricted to the above embodiments. A variety of changes or modifications may be made without departing from the scope of the appended claims. For example, a plurality of the structural blocks indicated in the diagrams of the embodiments may be combined into one, or one structural block may be divided into multiple parts.

## Claims

1. A computer system comprising a plurality of computer apparatuses that perform coordinated operations;
the system comprising a first computer apparatus among the plurality of computer apparatuses and a second computer apparatus, among the plurality of computer apparatuses, wherein the second computer apparatus is other than the first computer apparatus, one of which is an operating computer apparatus and the other of which is a standby computer apparatus configured to operate when the operating computer apparatus fails,
wherein the first computer is configured to judge whether an identifier of the first computer apparatus and an identifier of the second computer apparatus are included in a license file that includes identifiers of a plurality of computer apparatuses to which a license for software to perform the coordinated operations is granted,
when the first computer apparatus is the operating computer apparatus, if the identifier of the first computer apparatus is included in the license file, the first computer apparatus is configured to permit the coordinated operations, using the software, by the second computer apparatus, even if the identifier of the second computer apparatus is not included in the license file, and
when the first computer apparatus is the standby computer apparatus, if the second computer apparatus judges that the identifier of the second computer apparatus is included in the license file and the identifier of the first computer apparatus is not included in the license file, and if the first computer apparatus operates due to failure of the second computer apparatus, the first computer apparatus is configured to not permit the coordinated operations by the second computer apparatus.

2. The computer system of claim 1, wherein the second computer apparatus is configured to stop the coordinated operations when the first computer apparatus stops while the coordinated operations by the second computer apparatus are being permitted even if the identifier of the second computer apparatus is not included in the license file.

3. The computer system of claim 1 or 2, wherein the first computer apparatus is configured to stop the coordinated operations by the second computer apparatus when the coordinated operations by the second computer apparatus have been permitted for a predetermined time or longer even if the identifier of the second computer apparatus is not included in the license file.

4. The computer system of any one of claims 1 to 3, wherein the first computer apparatus is configured not to permit the coordinated operations by the second computer apparatus when the coordinated operations by the second computer apparatus have been permitted more than a predetermined number of times even if the identifier of the second computer apparatus is not included in the license file.

5. A license management method for managing a license for software to perform coordinated operations in a computer system comprising a plurality of computer apparatuses that perform the coordinated operations,
the system comprising a first computer apparatus among the plurality of computer apparatuses and a second computer apparatus, among the plurality of computer apparatuses, wherein the second computer apparatus is other than the first computer apparatus, one of which is an operating computer apparatus and the other of which is a standby computer apparatus configured to operate when the operating computer apparatus fails,
the license management method comprising:
judging whether an identifier of the first computer apparatus and an identifier of the second computer apparatus are included in a license file that includes identifiers of a plurality of computer apparatuses to which the license for software is granted; and
when the first computer apparatus is the operating computer apparatus, if the identifier of the first computer apparatus is included in the license file, permitting the coordinated operations using the software by the second computer apparatus, even if the identifier of the second computer apparatus is not included in the license file, and
when the first computer apparatus is the standby computer apparatus, if the second computer apparatus judges that the identifier of the second computer apparatus is included in the license file and the identifier of the first computer apparatus is not included in the license file, and if the first computer apparatus operates due to failure of the second computer apparatus, not permitting the coordinated operations by the second computer apparatus.

## Patentansprüche

1. Computersystem, das eine Vielzahl von Computereinrichtungen umfasst, die koordinierte Betriebe durchführen;
wobei das System eine erste Computereinrichtung aus der Vielzahl von Computereinrichtungen und eine zweite Computereinrichtung aus der Vielzahl von Computereinrichtungen umfasst, wobei die zweite Computereinrichtung eine andere als die erste Computereinrichtung ist, von denen eine eine Betriebscomputereinrichtung und die andere eine Standbycomputereinrichtung ist, die für den Betrieb bei Ausfall der Betriebscomputereinrichtung ausgebildet ist,
wobei der erste Computer ausgebildet ist, um zu beurteilen, ob eine Kennung der ersten Computereinrichtung und eine Kennung der zweiten Computereinrichtung in eine Lizenzdatei eingeschlossen sind, die Kennungen einer Vielzahl von Computereinrichtungen einschließt, denen eine Lizenz für Software zum Durchführen der koordinierten Betriebe erteilt wird,
wenn die erste Computereinrichtung die Betriebscomputereinrichtung ist, wenn die Kennung der ersten Computereinrichtung in die Lizenzdatei eingeschlossen ist, die erste Computereinrichtung so ausgebildet ist, dass sie den koordinierten Betrieb mithilfe der Software durch die zweite Computereinrichtung ermöglicht, auch wenn die Kennung der zweiten Computereinrichtung nicht in der Lizenzdatei eingeschlossen ist, und
wenn die erste Computereinrichtung die Standbycomputereinrichtung ist, wenn die zweite Computereinrichtung beurteilt, dass die Kennung der zweiten Computereinrichtung in die Lizenzdatei eingeschlossen ist und die Kennung der ersten Computereinrichtung nicht in der Lizenzdatei eingeschlossen ist, und wenn die erste Computereinrichtung aufgrund eines Ausfalls der zweiten Computereinrichtung in Betrieb ist, die erste Computereinrichtung so ausgebildet ist, dass sie den koordinierten Betrieb der zweiten Computereinrichtung nicht zulässt.

2. Computersystem nach Anspruch 1, wobei die zweite Computereinrichtung so ausgebildet ist, dass sie den koordinierten Betrieb stoppt, wenn die erste Computereinrichtung stoppt, während der koordinierte Betrieb durch die zweite Computereinrichtung zulässig ist, auch wenn die Kennung der zweiten Computereinrichtung nicht in der Lizenzdatei eingeschlossen ist.

3. Computersystem nach Anspruch 1 oder 2, wobei die erste Computereinrichtung so ausgebildet ist, dass sie den koordinierten Betrieb durch die zweite Computereinrichtung stoppt, wenn der koordinierte Betrieb durch die zweite Computereinrichtung für eine vorbestimmte Zeit oder länger zugelassen wurde, auch wenn die Kennung der zweiten Computereinrichtung nicht in der Lizenzdatei eingeschlossen ist.

4. Computersystem nach einem der Ansprüche 1 bis 3, wobei die erste Computereinrichtung so ausgebildet ist, dass sie den koordinierten Betrieb der zweiten Computereinrichtung nicht zulässt, wenn der koordinierte Betrieb der zweiten Computereinrichtung mehr als eine vorbestimmte Anzahl von Malen zugelassen wurde, auch wenn die Kennung der zweiten Computereinrichtung nicht in der Lizenzdatei eingeschlossen ist.

5. Lizenzverwaltungsverfahren zum Verwalten einer Lizenz für Software zur Durchführung koordinierter Betriebe in einem Computersystem, das eine Vielzahl von Computereinrichtungen umfasst, die die koordinierten Betriebe durchführen,
wobei das System eine erste Computereinrichtung aus der Vielzahl von Computereinrichtungen und eine zweite Computereinrichtung aus der Vielzahl von Computereinrichtungen umfasst, wobei die zweite Computereinrichtung eine andere als die erste Computereinrichtung ist, von denen eine eine Betriebscomputereinrichtung und die andere eine Standbycomputereinrichtung ist, die für den Betrieb bei Ausfall der Betriebscomputereinrichtung ausgebildet ist,
wobei das Lizenzverwaltungsverfahren Folgendes umfasst:
Beurteilen, ob eine Kennung der ersten Computereinrichtung und eine Kennung der zweiten Computereinrichtung in einer Lizenzdatei enthalten sind, die Kennungen einer Vielzahl von Computereinrichtungen einschließt, für die die Lizenz für Software erteilt wird; und
wenn die erste Computereinrichtung die Betriebscomputereinrichtung ist, wenn die Kennung der ersten Computereinrichtung in der Lizenzdatei eingeschlossen ist, Zulassen des koordinierten Betriebs der Software durch die zweite Computereinrichtung, auch wenn die Kennung der zweiten Computereinrichtung nicht in der Lizenzdatei eingeschlossen ist, und
wenn die erste Computereinrichtung die Standbycomputereinrichtung ist, wenn die zweite Computereinrichtung beurteilt, dass die Kennung der zweiten Computereinrichtung in der Lizenzdatei eingeschlossen ist und die Kennung der ersten Computereinrichtung nicht in der Lizenzdatei eingeschlossen ist, und wenn die erste Computereinrichtung aufgrund eines Ausfalls der zweiten Computereinrichtung in Betrieb ist, nicht Zulassen des koordinierten Betriebs durch die zweite Computereinrichtung.

## Revendications

1. Système informatique comprenant une pluralité d'appareils informatiques qui réalisent des fonctionnements coordonnés ;
le système comprenant un premier appareil informatique parmi la pluralité d'appareils informatiques et un second appareil informatique, parmi la pluralité d'appareils informatiques, dans lequel le second appareil informatique est autre que le premier appareil informatique, dont l'un est un appareil informatique de fonctionnement et l'autre est un appareil informatique de secours configuré pour fonctionner lorsque l'appareil informatique de fonctionnement est défaillant,
dans lequel le premier ordinateur est configuré pour juger si un identifiant du premier appareil informatique et un identifiant du second appareil informatique sont inclus dans un fichier de licence qui inclut des identifiants d'une pluralité d'appareils informatiques auxquels une licence de logiciel pour réaliser les fonctionnements coordonnés est accordée,
lorsque le premier appareil informatique est l'appareil informatique de fonctionnement, si l'identifiant du premier appareil informatique est inclus dans le fichier de licence, le premier appareil informatique est configuré pour permettre le fonctionnement coordonné, en utilisant le logiciel, par le second appareil informatique, même si l'identifiant du second appareil informatique n'est pas inclus dans le fichier de licence, et
lorsque le premier appareil informatique est l'appareil informatique de secours, si le second appareil informatique juge que l'identifiant du second appareil informatique est inclus dans le fichier de licence et que l'identifiant du premier appareil informatique n'est pas inclus dans le fichier de licence, et si le premier appareil informatique fonctionne en raison d'une défaillance du second appareil informatique, le premier appareil informatique est configuré pour ne pas permettre les fonctionnements coordonnés par le second appareil informatique.

2. Système informatique selon la revendication 1, dans lequel le second appareil informatique est configuré pour arrêter les fonctionnements coordonnés lorsque le premier appareil informatique s'arrête, même si les fonctionnements coordonnés par le second appareil informatique sont autorisés et que l'identifiant du second appareil informatique n'est pas inclus dans le fichier de licence.

3. Système informatique selon la revendication 1 ou la revendication 2, dans lequel le premier appareil informatique est configuré pour arrêter les fonctionnements coordonnés par le second appareil informatique lorsque les fonctionnements coordonnés par le second appareil informatique ont été autorisés pendant une durée prédéterminée ou plus longtemps même si l'identifiant du second appareil informatique n'est pas inclus dans le fichier de licence.

4. Système informatique selon l'une quelconque des revendications 1 à 3, dans lequel le premier appareil informatique est configuré pour ne pas autoriser les fonctionnements coordonnés par le second appareil informatique lorsque les fonctionnements coordonnés par le second appareil informatique ont été autorisés plus d'un nombre prédéterminé de fois même si l'identifiant du second appareil informatique n'est pas inclus dans le fichier de licence.

5. Procédé de gestion de licence pour gérer une licence de logiciel pour réaliser des fonctionnements coordonnés dans un système informatique comprenant une pluralité d'appareils informatiques qui réalisent les fonctionnements coordonnés,
le système comprenant un premier appareil informatique parmi la pluralité d'appareils informatiques et un second appareil informatique, parmi la pluralité d'appareils informatiques, dans lequel le second appareil informatique est autre que le premier appareil informatique, dont l'un est un appareil informatique de fonctionnement et l'autre est un appareil informatique de secours configuré pour fonctionner lorsque l'appareil informatique de fonctionnement est défaillant,
le procédé de gestion de licence comprenant :
le jugement si un identifiant du premier appareil informatique et un identifiant du second appareil informatique sont inclus dans un fichier de licence qui inclut des identifiants d'une pluralité d'appareils informatiques auxquels la licence de logiciel est accordée ; et
lorsque le premier appareil informatique est l'appareil informatique de fonctionnement, si l'identifiant du premier appareil informatique est inclus dans le fichier de licence, l'autorisation des fonctionnements coordonnés utilisant le logiciel par le second appareil informatique, même si l'identifiant du second appareil informatique n'est pas inclus dans le fichier de licence, et
lorsque le premier appareil informatique est l'appareil informatique de secours, si le second appareil informatique estime que l'identifiant du second appareil informatique est inclus dans le fichier de licence et que l'identifiant du premier appareil informatique n'est pas inclus dans le fichier de licence, et si le premier appareil informatique fonctionne en raison d'une défaillance du second appareil informatique, l'interdiction des fonctionnements coordonnés par le second appareil informatique.
